Europäisches Patentamt

European Patent Office

Office européen des brevets

(19)

(11) **EP 1 617 692 A1**

(12) **DEMANDE DE BREVET EUROPEEN**

(43) Date de publication:
**18.01.2006 Bulletin 2006/03**

(51) Int Cl.:
*H04Q 7/38* (2006.01)     *H04L 12/56* (2006.01)

(21) Numéro de dépôt: **04291785.6**

(22) Date de dépôt: **13.07.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(71) Demandeurs:
• **FRANCE TELECOM**
**75015 Paris (FR)**
• **INRIA INSTITUT NATIONAL DE RECHERCHE EN INFORMATIQUE ET EN AUTOMATIQUE Rocquencourt**
**F-78153 Le Chesnay (FR)**

(72) Inventeurs:
• **Kelif, Jean-Marc**
**75012 Paris (FR)**

• **Touati, Corinne**
**94000 Creteil (FR)**
• **Galtier, Jérome**
**06000 Nice (FR)**
• **Altman, Eitan**
**06000 Nice (FR)**
• **Fourestie, Benoit**
**75014 Paris (FR)**

(74) Mandataire: **Dossmann, Gérard et al**
**Bureau D.A. Casalonga-Josse**
**Paul-Heyse-Strasse 33**
**80336 München (DE)**

(54) **Procédé et équipement d'allocation de débits de données pour terminaux mobiles de télécommunication**

(57) Pour allouer des débits de données à un ensemble de terminaux mobiles de télécommunication (T) d'une cellule (C1, C2, C3) d'un réseau cellulaire de télécommunication, pour chaque nouveau terminal entrant dans la cellule, on calcule une nouvelle valeur de débit pour une partie au moins des terminaux de la cellule de manière à satisfaire des contraintes liées au fonctionnement de la cellule et à obtenir un débit maximum pour les terminaux de la cellule, et l'on affecte auxdits terminaux les débits calculés.

## FIG.1

**Description**

La présente invention concerne le domaine des réseaux de télécommunication de type mobile, et se rapporte plus particulièrement à l'allocation de débits de données aux terminaux mobiles d'un réseau téléphonique cellulaire.

Par données, on entend dans le cadre de la présente description, tout type de communication, telle que des données, voix,...

Une application particulièrement intéressante de l'invention concerne l'allocation optimale et équitable de débits à des mobiles d'un réseau de type CDMA ou à accès multiple par code.

Les exploitants des réseaux de télécommunication cherchent généralement à maximiser le nombre d'utilisateurs pouvant être servis par un réseau donné et pour une qualité donnée, cette qualité pouvant être variable selon les utilisateurs. En particulier, dans les réseaux de téléphonie de type CDMA, pour un utilisateur donné, les autres utilisateurs dans le sens montant, ou les stations de base autres que celle avec laquelle il communique, dans le sens descendant, constituent des sources de bruit qui le perturbent. Si le nombre d'utilisateurs devient trop important, le bruit augmente et entraîne une chute de la qualité voire un blocage de la communication. Un contrôle du débit de données des mobiles peut permettre de contrôler et limiter ce bruit et d'améliorer ainsi les performances.

C'est pour ces raisons que l'un des soucis constants des opérateurs de télécommunication est d'optimiser la gestion des débits des mobiles et d'optimiser l'admission de nouveaux terminaux dans les cellules de manière à maximiser le nombre de terminaux dans chaque cellule, tout en assurant une qualité de service (QoS) donnée.

Généralement, les algorithmes mis en oeuvre pour contrôler le débit de données des terminaux dans les cellules ainsi que pour contrôler l'admission de nouveaux terminaux sont basés sur le contrôle du niveau de charge. Par exemple, si l'admission d'un mobile dans une cellule provoque une augmentation du niveau de charge telle que la charge totale excède un seuil donné, le mobile entrant est contraint de diminuer son débit pour être admis. Au-delà d'un certain seuil, tous les nouveaux terminaux entrants sont rejetés.

Ainsi, dans l'état de la technique, lorsque la charge d'une cellule est trop importante pour autoriser l'admission d'un nouveau terminal, le débit autorisé pour ce terminal est réduit, ce qui engendre une baisse de la qualité de service pour le terminal entrant. Les terminaux déjà en communication ne sont pas concernés.

Les politiques d'admission de nouveaux terminaux peuvent être mises en oeuvre de diverses manières. Par exemple, il est possible d'adapter le débit du mobile entrant en lui garantissant un débit donné. Cette mise en oeuvre induit des taux de rejet relativement importants et limite par conséquent la capacité du réseau. On peut également adapter le débit du terminal entrant de manière à toujours l'admettre, même avec un débit nul. Cette mise en oeuvre ne garantit pas la qualité de service (QoS).

Enfin, ces différentes stratégies ne sont pas optimales, dans la mesure où il est possible d'augmenter le débit d'un mobile sans nécessairement diminuer celui d'un autre.

Ainsi, les techniques conventionnelles d'allocation de débits ne permettent pas d'allouer des débits à des terminaux dans un réseau de manière optimale et équitable. Elles ne permettent également pas d'explorer toute la gamme des stratégies équitables de gestion dynamique des débits des mobiles dans le réseau. Elles ne permettent pas non plus d'utiliser toute la gamme des stratégies de gestion de l'admission des mobiles permettant d'obtenir un taux de rejet compris entre des valeurs extrêmes correspondant l'une à une qualité de service garantie et l'autre à une qualité de service non-garantie.

Au vu de ce qui précède, un but de l'invention est de permettre d'allouer en temps réel des débits à des terminaux d'une cellule d'un réseau cellulaire de manière à obtenir des débits optimum et de gérer l'admission des mobiles dans un réseau tout en offrant une garantie de débit pour l'ensemble des terminaux de la cellule.

L'invention a donc pour objet, selon un premier aspect, un procédé d'allocation de débits de données pour un ensemble de terminaux mobiles de télécommunication d'une cellule d'un réseau cellulaire de télécommunication, selon lequel, pour chaque nouveau terminal entrant dans la cellule, on calcule une nouvelle valeur de débit pour une partie des terminaux de la cellule de manière à satisfaire à des contraintes liées au fonctionnement de la cellule et à obtenir un débit maximum pour les terminaux de la cellule, et l'on affecte auxdits terminaux les débits calculés.

Il est ainsi possible, grâce à l'invention, de garantir l'optimalité des débits au sens de « Pareto » dans le réseau, c'est-à-dire que les débits sont maximisés de sorte qu'il n'est plus possible d'augmenter le débit d'un mobile sans être contraint de diminuer le débit d'un autre mobile. Il en résulte une utilisation optimale en temps réel des ressources du réseau, un accroissement consécutif de la capacité du réseau, en terme du nombre de mobiles ou en terme de débit global de la cellule. Les opérateurs sont dès lors en mesure de valoriser les débits associés à des services et de proposer une équité basée que la valeur des services proposés.

Selon une autre caractéristique de l'invention, on alloue les débits en fonction de stratégies prédéterminées d'allocation des débits.

En effet, selon un mode de mise en oeuvre, les débits $r(s,t)$ affectés aux terminaux sont calculés de manière à maximiser la fonction suivante :

$$\sum_{s,t} \frac{r(s,t)^{1-\alpha}}{1-\alpha}$$

dans laquelle :

r(s,t) désigne le débit instantané d'un émetteur s vers un récepteur t ; et
$\alpha$ désigne un paramètre variable de sélection d'une stratégie d'allocation des débits.

Dans le sens ascendant, l'émetteur s est formé par le terminal et le récepteur t est la station de base.

Il est ainsi possible, en réglant la valeur du paramètre, de sélectionner la stratégie d'allocation des débits.

Selon encore une autre caractéristique de l'invention, on procède à un calcul d'une nouvelle valeur de débit et à une affectation des débits calculés si la puissance demandée au moins à la station de base de la cellule avec laquelle le terminal entrant communique est inférieure à une valeur maximale de puissance admissible et si la charge au moins de la station de base de la cellule avec laquelle le terminal entrant communique est inférieure à une valeur de maximale de charge admissible.

On rejette alors le terminal entrant si le débit demandé par le terminal est inférieur ou égal au débit minimum requis pour obtenir un service demandé par le terminal.

Selon un mode de mise en oeuvre avantageux, on procède en outre à une pondération des débits alloués en fonction des services demandés par les terminaux, les débits affectés aux terminaux étant calculés de manière à maximiser la fonction suivante :

$$\sum_{s,t} \frac{q(s,t)r(s,t)^{1-\alpha}}{1-\alpha}$$

q(s,t) désignant un coefficient de pondération des liaisons entre un terminal t et une station de base s.

Dans un mode de réalisation de l'invention, on satisfait aux contraintes liées au fonctionnement de la cellule en calculant les débits de sorte que les relations suivantes soient satisfaites :

$$MR_{s,t} \le r(s,t) \le PR_{s,t}$$

$$0 \le p_{tot,s} \le \overline{p_{tot,s}}$$

et

$$\delta_{s,t} r(s,t) \le p'_{s,t} / \left( \upsilon(t) + C \sum_{s' \neq s} p'_{s',t} \right)$$

dans lesquelles :

MRs,t désigne un débit minimum à envoyer de l'émetteur s vers un récepteur t ;
PRs,t désigne un débit maximum à envoyer de l'émetteur s vers un récepteur t ;
Ptot,s désigne la puissance totale transmise par l'émetteur ;

$\overline{P_{tot,s}}$ désigne la puissance totale maximale de l'émetteur ;

$\delta$(s,t) désigne une valeur cible souhaitée du rapport entre le rapport signal/bruit minimum requis et le débit ;
v(t) désigne un bruit thermique au niveau du terminal ;
C est une constante multiplicative ; et
P's,t est la puissance du signal émis par l'émetteur, reçue au niveau du terminal.

Selon encore un autre mode de mise en oeuvre, les débits r(s,t) affectés aux terminaux pour les liaisons ascendantes sont calculés de manière à maximiser la fonction suivante :

$$\frac{1}{1-\alpha}\sum_{s,t}\left[\frac{\rho(s,t)}{1-\delta_{s,t}\rho(s,t)}\right]^{1-\alpha}$$

dans laquelle $\alpha$ désigne un paramètre variable de sélection d'une stratégie d'allocation des débits, et dans laquelle :

$$\rho(s,t) = \frac{r(s,t)}{1+C\delta_{s,t}r(s,t)}$$

où :

r(s,t) désigne le débit instantané d'un émetteur s vers un terminal t ;
*C* est une constante multiplicative ; et
$\delta(s,t)$ désigne une valeur cible souhaitée du rapport entre le rapport signal/bruit minimum requis et le débit.

Dans ce cas, on satisfait les contraintes liées au fonctionnement de la cellule en calculant les débits pour les terminaux i de sorte que les relations suivantes soient satisfaites :

$$\frac{MR_i}{1+\delta_i MR_i} \leq \rho(i) \leq \frac{PR_i}{1+\delta i PR_i}$$

$$(1+\lambda)\sum_{j=1}^{Nc}\delta_j\rho(j) \leq 1$$

et

$$0 \leq \upsilon_i\delta_i\rho(i) \leq h_i\overline{p_i}(1-(1+\lambda)\sum_{j=1}^{Nc}\delta_i\rho(j))$$

dans lesquelles :

MRi désigne un débit minimum à envoyer vers un récepteur i;
PRi désigne un débit maximum à envoyer vers un récepteur i ;
$\underline{\lambda}$ désigne un coefficient de proportionnalité ;
$\overline{p_i}$ désigne la puissance totale maximale de l'émetteur ;
*hi* désigne un facteur d'atténuation entre le transmetteur i et la station de base;
*Nc* désigne le nombre de terminaux dans la cellule c ; et
$\upsilon$ représente le bruit thermique reçu à la station de base de la cellule *c*.

On peut également satisfaire les contraintes liées au fonctionnement de la cellule en calculant les débits pour les terminaux i de sorte que les relations suivantes soient satisfaites

$$\frac{MR_i}{1+\delta_i MR_i} \leq \rho(i) \leq \frac{PR_i}{1+\delta_i PR_i}$$

$$C_D \sum_i \delta_i \rho(i) \leq 1$$

$$0 \leq P_{SCH} + P_{CCH} + \sum_{i \in C} \delta_i \rho(i) + \frac{N_D(i,b) + C_D \sum_j \delta_j \rho(j)[N_D(j,b) - N_D(i,b)]}{1 - C_D \sum_j \delta_j \rho(j)} \leq \overline{p_b^{tot}}$$

dans lesquelles :

$P_{SCH}$ désigne la puissance du canal de synchronisation non orthogonal descendant de la station de base b ;

$P_{CCH}$ désigne la puissance des canaux communs descendant de la station de base b ;

$\overline{p_b^{tot}}$ désigne la limite maximale de la puissance totale de transmission de la station de base b ;

$C_D = (1+F)\beta$, F désignant le rapport des interférences intracellulaires sur les interférences intercellulaires reçues par le terminal, et $\beta$ désignant un facteur caractérisant l'interférence due au canal de synchronisation ;

et dans lesquelles :

$$ND(i,b) = (1+F)(P_{SCH} + \beta P_{CCH}) + \nu/h_{b,i}$$

$\nu$ désignant le bruit au niveau du terminal i.

L'invention a également pour objet un équipement d'allocation de débits de données pour un ensemble de terminaux mobiles de télécommunication d'une cellule d'un réseau cellulaire de télécommunication, caractérisé en ce qu'il comporte des moyens de calcul d'une nouvelle valeur de débit pour une partie au moins des terminaux de la cellule, pour chaque nouveau terminal entrant dans la cellule, de manière à satisfaire à des contraintes liées au fonctionnement de la cellule et à obtenir un débit maximum pour les terminaux de la cellule, et des moyens pour affecter auxdits terminaux les débits calculés.

Selon un troisième objet, l'invention concerne un module logiciel pouvant être enregistré dans ou transmis par un support de données et comprenant des instructions pour commander l'exécution du procédé tel que défini ci-dessus par un équipement informatique.

Un tel support de données peut être un support matériel de stockage, par exemple un CD-ROM, une disquette magnétique ou un disque dur, ou bien un support transmissible tel qu'un signal électrique, optique ou radio.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre schématiquement l'architecture d'un réseau cellulaire de télécommunication mettant en oeuvre un procédé selon l'invention ; et
- la figure 2 illustre les principales phases du procédé d'allocation de débit selon l'invention.

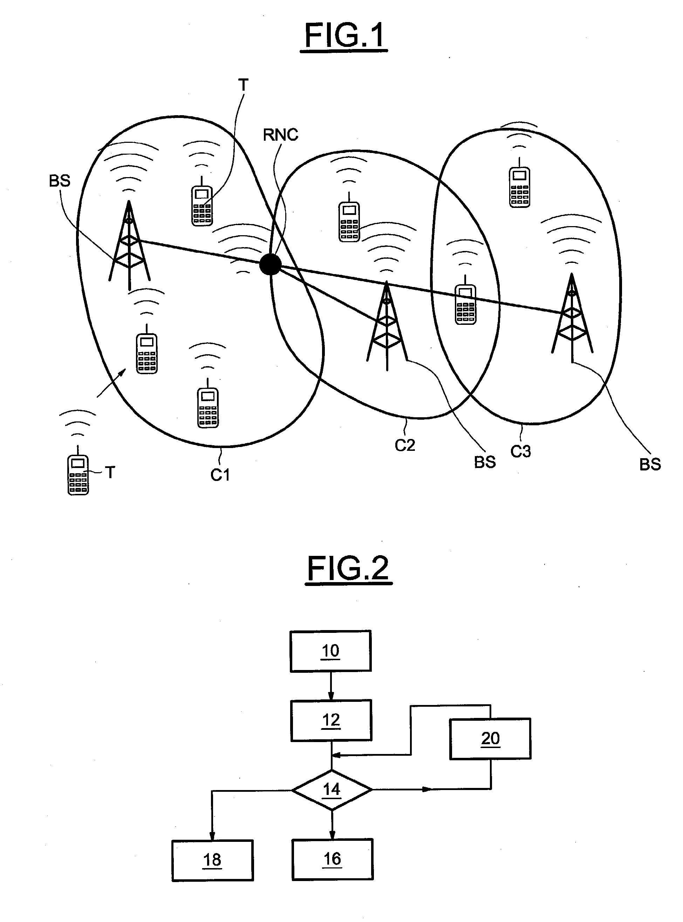

Sur la figure 1, on a représenté l'architecture générale d'un réseau de téléphonie mobile cellulaire mettant en oeuvre un procédé d'allocation optimale et équitable des débits conformément à l'invention.

Ce procédé est destiné à être appliqué aux réseaux de type CDMA ou W-CDMA.

Sur cette figure, seules trois cellules ont été représentées, par souci de clarté.

Comme on le voit, le territoire à desservir est décomposé en cellules C1, C2 et C3. Une cellule est liée à une station de base BS (ou « node B »), qui possède une antenne permettant d'émettre vers les terminaux, tels que T, et de recevoir des signaux en provenance de ces derniers.

Comme on le voit sur la figure, les stations de base sont gérées par un contrôleur de ressources radio ou RNC (« Radio Network Controller », en anglais) qui gère l'interface radio.

En particulier, le contrôleur RNC comporte tous les moyens matériels et logiciels et est dûment programmé pour procéder à une allocation des débits de données pour chaque terminal des cellules C1, C2 et C3 du sous-système radio dont il assure la gestion.

Conformément à une caractéristique de l'invention, cette allocation des débits se traduit, par la renégociation, à l'admission d'un mobile, des débits des mobiles présents dans la cellule de manière à obtenir un débit maximum pour les terminaux tel qu'il n'est plus possible d'augmenter le débit affecté à l'un des terminaux sans nécessiter de diminuer le débit d'un ou de plusieurs autres terminaux.

On notera que par admission d'un mobile, on entend, de manière générale, l'entrée d'un terminal dans une cellule, notamment lors de l'établissement d'un appel ou lors du passage d'une cellule à une autre.

Comme cela sera détaillé par la suite, cette procédure se traduit également par la renégociation des débits d'un nombre restreint de terminaux.

En outre, comme cela sera décrit en détail par la suite, la procédure d'allocation de débits mise en oeuvre au sein du contrôleur de station de base permet de choisir une ou plusieurs stratégies d'allocation de débit en fonction des besoins et des contraintes du réseau ou de l'opérateur. Il peut ainsi s'agir par exemple soit de maximiser le nombre de terminaux entrants, tout en ayant un débit optimum, soit de maximiser les débits des terminaux présents dans les cellules, soit encore de maximiser le nombre de mobiles indépendamment du débit.

L'admission d'un mobile dans le réseau, et donc dans l'une des cellules du réseau, nécessite avant tout le respect d'un certain nombre de contraintes liées au fonctionnement de la cellule. Il convient, en particulier, de vérifier que la charge de chaque station, en particulier celle de la station dans laquelle le mobile entre, ne dépasse pas une charge maximale admissible. Par ailleurs, la puissance demandée à l'ensemble des stations de base, et en particulier à la station de la cellule dans laquelle le mobile entre, ne doit pas dépasser une puissance maximale admissible.

Ainsi, en se référant maintenant à la figure 2, après qu'une requête par laquelle un terminal T demande à entrer dans une cellule du réseau ait été formulée (étape 10), lors de l'étape 12 suivante, le contrôleur de station de base procède à une estimation des puissances et des charges de la cellule. Il procède alors à un test (étape 14) de manière à vérifier que les critères sont respectés.

En particulier, au cours de cette étape 14, le contrôleur RNC contrôle que la puissance demandée et que la charge de chaque station sont inférieures à des valeurs de seuil maximales admissibles respectives. Si tel est le cas, l'entrée du nouveau terminal T est acceptée (étape 16). Au contraire, si tel n'est pas le cas, c'est-à-dire si la charge de chaque station ou la puissance demandée à l'ensemble des stations de base BS ne satisfait pas aux critères, et si le débit courant du mobile pour un service donné atteint une valeur minimale pour ce service, le nouveau terminal est alors rejeté (étape 18).

Par contre, si le débit courant du mobile est supérieur à la valeur minimale autorisée pour le service, mais que les critères liés à la puissance demandée et à la charge ne sont pas respectés, on met alors en oeuvre une procédure de calcul et d'affectation des débits pour les terminaux de la cellule (étape 20).

Comme indiqué précédemment, cette procédure de calcul et d'affectation des débits est effectuée au sein du contrôleur de station de base qui comporte tous les moyens matériels et logiciels appropriés pour mettre en oeuvre cette procédure.

Cette procédure consiste à calculer une nouvelle valeur de débit pour certains terminaux de la cellule afin de satisfaire aux critères contrôlés lors de l'étape 14 et à accepter ainsi le terminal dans la cellule, puis à affecter aux terminaux sélectionnés les débits calculés.

On considérera, par la suite, un cadre général dans lequel les contraintes peuvent s'appliquer au récepteur s ou au transmetteur t, c'est-à-dire au terminal T à la station de base BS, étant entendu qu'en liaison montante le récepteur est constitué par la station de base et l'émetteur est constitué par un terminal et, en liaison descendante, le récepteur est constitué par le terminal et l'émetteur par la station de base. Un transmetteur peut transmettre à plusieurs récepteurs (cas du lien descendant, selon lequel on considère une émission de la station de base vers les terminaux) et un récepteur peut recevoir de plusieurs transmetteurs, (cas d'un lien ascendant, c'est-à-dire des terminaux vers les stations de base).

Pour allouer les débits de manière optimale et équitable, le contrôleur de station de base procède à un calcul des débits affectés aux terminaux de manière à maximiser la fonction F suivante :

$$F = \sum_{s,t} \frac{r(s,t)^{1-\alpha}}{1-\alpha} \ldots\ldots\ldots\ldots\ldots\ldots\ldots\ldots\ldots\ldots\ldots (1)$$

dans laquelle :

r(s,t) désigne le débit instantané d'un émetteur s vers un terminal t ; et

α désigne un paramètre variable de sélection d'une stratégie d'allocation des débits.

Lorsque le paramètre α tend vers 1, la solution calculée est proportionnellement équitable, c'est-à-dire que l'on maximise le nombre de terminaux acceptés avec un débit optimum. Une allocation de débit {r(s,t)} qui satisfait les contraintes du système est alors proportionnellement équitable si, pour toute autre allocation de débit {r*(s,t)} qui satisfait les contraintes, on vérifie que :

$$\sum_{s,t} \frac{r*(s,t) - r(s,t)}{r(s,t)} \leq 0 \dots\dots\dots\dots\dots\dots\dots\dots\dots\dots\dots(2)$$

Une définition équivalente est qu'une allocation est proportionnellement équitable si et seulement si elle maximise le terme $\sum_{s,t} r(s,t)$.

Pour α = 0, on a une stratégie dite opportuniste, c'est-à-dire que l'on maximise la somme des débits tout en satisfaisant les contraintes du système. En d'autres termes, selon la stratégie obtenue pour α = 0, on maximise le nombre de modules indépendamment du débit.

Enfin, lorsque α tend vers l'infini, la stratégie adoptée maximise le débit des mobiles. On se rapproche donc au mieux des débits demandés initialement par les mobiles.

En ce qui concerne les contraintes du système, ces contraintes sont constituées par des contraintes sur les débits, des contraintes sur les puissances de chaque transmetteur, et des contraintes d'interférences. Elles peuvent être formulées d'une manière générale à partir des relations suivantes :

$$MR_{s,t} \leq r(s,t) \leq PR_{s,t} \dots\dots\dots\dots\dots\dots\dots\dots(3)$$

$$0 \leq p \leq \overline{p_{tot,s}} \dots\dots\dots\dots\dots\dots\dots\dots\dots\dots(4)$$

et

$$\delta_{s,t} r(s,t) \leq p'_{s,t} / \left( \upsilon(t) + C \sum_{s' \neq s} p'_{s',t} \right) \dots\dots(5)$$

dans lesquelles :

$MR_{s,t}$ désigne un débit minimum à envoyer de l'émetteur s vers un récepteur t ;
$PR_{s,t}$ désigne un débit maximum à envoyer de l'émetteur s vers un récepteur t ;
$P_{tot,s}$ désigne la puissance totale transmise par l'émetteur ;

$\overline{P_{tot,s}}$ désigne la puissance totale maximale de l'émetteur ;
$\delta(s,t)$ désigne une valeur cible souhaitée du rapport entre le rapport signal/bruit minimum requis par bit et le débit ;
$\upsilon(t)$ désigne un bruit thermique au niveau du terminal ;
$C$ est une constante multiplicative ; et
$P'_{s,t}$ est la puissance du signal émis par l'émetteur, reçue au niveau du terminal.

Les contraintes sur les débits font donc intervenir les puissances de transmission reçues. Pour optimiser les débits il faut donc en même temps contrôler d'une manière optimale les puissances de transmission p(s,t).

La puissance reçue est proportionnelle à la puissance transmise. Elle correspond aux termes p(s,t) h(s,t). Il a été démontré que la maximisation de l'équation (1) indiquée ci-dessus permet d'obtenir une charge maximale au sens de « Pareto », c'est-à-dire que si l'on augmente le débit d'un module, on doit alors diminuer la charge d'un autre mobile.

Les débits permettant de maximiser la fonction F d'utilité tout en satisfaisant aux contraintes liées au réseau peuvent être calculés selon des techniques mathématiques à la portée d'un homme du métier. De telles techniques ne seront donc pas décrites en détail par la suite. On notera cependant qu'une méthode dite « du simplex » peut être utilisée à cet effet. Cette méthode est décrite en détail dans l'ouvrage « Programmation linéaire, méthode et applications », de Philippe Caron, Alain Juhel et Franck Vandevelde, Ed. Dunod.

Dans un mode de mise en oeuvre, afin de pouvoir affecter des poids différents (q, m) correspondant par exemple à des priorités, pour un terminal, dans l'allocation des débits selon le service, on cherche à maximiser la fonction F' suivante :

$$\sum_{s,t} \frac{q(s,t)r(s,t)^{1-\alpha}}{1-\alpha} \qquad (6)$$

q(s,t) désignant un coefficient de pondération des liaisons entre un terminal t et une station de base s.

Afin de pouvoir résoudre le problème d'optimisation des débits de manière aisée, en particulier en raison de la complexité des contraintes liées aux interférences, on procède à une transformation de variable en posant la variable :

$$p(s,t) = \frac{r(s,t)}{1 + C\delta_{s,t} r(s,t)} \qquad (7)$$

La fonction d'utilité F est alors une fonction concave quand la valeur du paramètre $\alpha$ vérifie

$$\alpha > 2w$$

avec

$$w = \max_{s,t} \frac{\delta_{s,t} PR_{s,t}}{1 + \delta_{s,t} PR_{s,t}}$$

Il convient alors de maximiser la fonction F", en ce qui concerne le lien montant ou ascendant :

$$F'' = \frac{1}{1-\alpha} \sum_{s,t} \left[ \frac{\rho(s,t)}{1 - \delta_{s,t} \rho(s,t)} \right]^{1-\alpha} \qquad (8)$$

Afin de simplifier le problème et de le ramener à une seule cellule, des hypothèses sont formulées d'une part, en ce qui concerne le lien ascendant et, d'autre part, en ce qui concerne le lien descendant.

On ne considère qu'une seule station de base BS et la cellule C1, C2 ou C3 dans laquelle elle se situe. S'il y a plusieurs stations de base dans une même cellule, on appellera « cellule c » la zone de la cellule couverte par la station de base considérée, notée b.

En ce qui concerne le lien ascendant, l'interférence causée par les mobiles des autres cellules $I_{autre}$ est considérée, par approximation, proportionnelle à celle $I_{propre}$ due aux mobiles de la cellule c, selon un coefficient de proportionnalité $\lambda$ :

$$I_{autre} = \lambda I_{propre}$$

Avec cette hypothèse, il est possible de découpler le contrôle de puissance du contrôle des débits en déterminant explicitement, pour chaque débit donné, une puissance optimale, qui génère le moins d'interférences possibles, et qui est par ailleurs minimale et permet donc d'utiliser au mieux la contrainte de puissance de transmission. En exprimant cette puissance optimale de transmission en fonction des débits, il est possible de simplifier les contraintes initiales pour obtenir des contraintes linéaires sur les débits. Les contraintes sont alors données par les relations suivantes :

$$\frac{MR_i}{1+\delta_i MR_i} \leq \rho(i) \leq \frac{PR_i}{1+\delta i PR_i} \dots\dots\dots\dots\dots\dots(9)$$

$$(1+\lambda) \sum_{j=1}^{Nc} \delta_j \rho(j) \leq 1 \dots\dots\dots\dots\dots\dots\dots\dots\dots(10)$$

et

$$0 \leq \upsilon_i \delta_i \rho(i) \leq h_i \overline{p_i}(1-(1+\lambda)\sum_{j=1}^{Nc}\delta_j\rho(j))\dots(11)$$

dans lesquelles :

$MR_i$ désigne un débit minimum à envoyer vers un récepteur i;
$PR_i$ désigne un débit maximum à envoyer vers un récepteur i ;
$\lambda$ désigne un coefficient de proportionnalité ;
$\overline{p_i}$ désigne la puissance totale maximale de l'émetteur ;
$h_i$ désigne un facteur d'atténuation entre le transmetteur i et la station de base.

Dans ces relations, l'indice i représente le transmetteur. Une seule station de base commune est réceptrice.
Comme dans l'exemple de mise en oeuvre précédemment décrit, la maximisation de la fonction d'utilité définie par la relation (1) ci-dessus avec ces contraintes, détermine le débit optimal et équitable pour le lien ascendant et se calcule dans chaque cellule. Elle se traduit par l'affectation d'un nouveau débit pour un ensemble restreint de terminaux sélectionnés.
Ce débit est alors utilisé pour être alloué en temps réel aux terminaux et pour prendre des décisions d'admission d'appel.
Cette résolution d'équation correspond à une optimisation convexe qui peut s'écrire sous la forme d'un programme semi-défini positif, pour lequel des méthodes de calcul sont largement répandues.
En ce qui concerne le lien descendant, on considère à nouveau une station de base b et la zone qu'elle couvre, appelée cellule « c ». On définit un paramètre $F_{b,m}$ comme constitué par le rapport des interférences intracellulaires et des interférences intercellulaires reçues par le mobile m, lorsqu'il est situé sous l'influence de la station de base b. Ce paramètre $F_{b,m}$ est donné par la relation :

$$F_{b,m} = \frac{I_{\text{int } er}}{I_{\text{int } ra}} \dots\dots\dots\dots\dots\dots\dots\dots\dots\dots\dots\dots\dots\dots\dots(12)$$

avec
$I_{\text{int } er}$ :interférences intercellulaires
$I_{\text{int } ra}$ : interférences intracellulaires
et

$$I_{\text{inter}} = \sum_{\substack{b'=1 \\ b' \neq b}}^{B} P_{tot,b'} h_{b',m}, \dots\dots\dots\dots\dots\dots\dots\dots\dots\dots\dots(13)$$

$$I_{\text{intra}} = \beta(P_{tot,b} - P_{b,m})h_{b,m} + (1-\beta)P_{SCH}h_{b,m}\dots\dots\dots\dots(14)$$

La puissance totale transmise par la station de base b s'écrit alors :

$$P_{tot,b} = \sum_{m'=1}^{Nc} P_{b,m}' + P_{CCH,b} + P_{SCH,b}\dots\dots\dots\dots\dots\dots\dots\dots(15)$$

dans laquelle :

$Nc$ désigne le nombre de mobiles dans la cellule c ;
$\beta$ est un facteur caractérisant l'interférence due au canal de synchronisation ($0 \leq \beta \leq 1$) ;
$h_{b,i}$ est un facteur de gain entre la station b et le mobile i ;
$P_{SCH}$ représente la puissance du canal de synchronisation non-orthogonale descendant de la station de base b ; et
$P_{CCH}$ représente la puissance des canaux communs descendant de la station de base b.

En considérant que le paramètre $F_{b,m}$ est constant et ne dépend ni du débit ni de la charge, les contraintes du système à résoudre deviennent :

$$\frac{MR_i}{1+\delta_i MR_i} \leq \rho(i) \leq \frac{PR_i}{1+\delta_i PR_i}\dots\dots\dots\dots\dots(16)$$

$$C_D \sum_i \delta_i \rho(i) \leq 1\dots\dots\dots\dots\dots\dots\dots\dots\dots\dots\dots(17)$$

$$0 \leq P_{SCH} + P_{CCH} + \sum_{i \in C}\delta_i\rho(i) + \frac{N_D(i,b) + C_D\sum_j \delta_j\rho(j)[N_D(j,b) - N_D(i,b)]}{1 - C_D\sum_j \delta_j\rho(j)} \leq p_b^{tot}\dots(18)$$

dans lesquelles :

$P_{SCH}$ désigne la puissance du canal de synchronisation non orthogonal descendant de la station de base b ;
$P_{CCH}$ désigne la puissance des canaux communs descendant de la station de base b ;

$p_b^{tot}$ désigne la limite maximale de la puissance totale de transmission de la station de base b ;

$C_D = (1+F)\beta$, F désignant le rapport des interférences intracellulaires sur les interférences intercellulaires reçues par le terminal, et $\beta$ désignant un facteur caractérisant l'interférence due au canal de synchronisation ;

et dans lesquelles :

$$N_D(i,b) = (1+F)(P_{SCH} + \beta P_{CCH}) + v/h_{b,i}$$

v désignant le bruit au niveau du terminal i.

Dans le cas particulier d'une liaison descendante, pour un terminal se situant en macrodiversité, on considère le cas où un terminal passe d'une cellule à une autre, notées respectivement s et 1, sans changement de fréquence (« Soft-handover »).

On démontre alors que les contraintes sont alors données définies par les relations suivantes :

$$\frac{\overline{MR_i}}{1+\delta_i MR_i} \le \rho(i) \le \frac{PR_i}{1+\delta_i PR_i} \dots\dots\dots\dots\dots\dots\dots (19)$$

$$\sum_k C_{i(k)}\delta_k\rho(k) \le 1 \dots\dots\dots\dots\dots\dots\dots\dots\dots\dots (20)$$

et

$$O \le \sum_{k\varepsilon c} \delta_k\rho(k)N_{i(k)}(k,b) \le \overline{p_b^{tot}}(1-C_{i(k)}\sum_{k'}\delta_{k'}\rho(k'))\dots\dots\dots (21)$$

Selon une implémentation pratique du procédé selon l'invention, on élabore une fonction globale des débits et les calculs décrits précédemment sont effectués sur la base de cette fonction globale. Cette fonction globale est déterminée de manière à caractériser les débits et à vérifier les conditions de saturation d'une cellule, tout en permettant une grande simplification des calculs.

Cette fonction globale est alors par exemple de la forme :

$$\sum_i g_i(r(i)) \le C \dots\dots\dots\dots\dots\dots\dots\dots\dots\dots\dots\dots (22)$$

On cherche alors à maximiser :

$$fi(x) = \begin{cases} \dfrac{1}{1-\alpha}\sum_i r(i)^{1-\alpha} & \text{si } \alpha \ne 1, \\ \log(r(i)) & \text{si } \alpha = 1. \end{cases} \dots\dots\dots\dots\dots\dots (23)$$

On obtient alors, si l'on pose λ=g$_i$(r(i)) et

$$f(x) = \left| \frac{1}{1-\alpha}[g_i - 1(x)]^{1-\alpha} \text{ si } \alpha \ne 1, \right.$$

Le problème qui se pose en cas de saturation est alors de minimiser la fonction F''' :

$$F''' = \sum_i f_i(\lambda_i)$$

$$\dots\dots\dots\dots\dots\dots\dots\dots\dots\dots\dots\dots\dots\dots\dots(24)$$

avec $\begin{cases} m_i \leq \lambda_i \leq M_i \\ \sum_i \lambda_i \leq C \end{cases}$

La méthode consiste donc à approximer les fonctions $f_i$ par des fonctions semi-définies positif représentables, comme, par exemple, la fonction log et à procéder alors au calcul de maximisation. On obtient alors une série de valeurs de $\lambda_i$ variant continûment entre une valeur de débit minimum et une valeur de débit maximum.

Si les valeurs de débit r(i) ne peuvent comprendre que des valeurs par palier, ce qui est généralement le cas en pratique, on prendra la plus grande valeur de palier telle $g_i(r(i)) \leq \lambda_i$.

Au vu de ce qui précède, la procédure consiste donc à évaluer les paramètres $m_i$, $M_i$, $f_i$ et C par une modélisation permettant une linéarisation des contraintes de capacité, à résoudre le problème d'optimisation moyennant une approximation éventuelle des fonctions $f_i$, et, en fonction de la solution continue $\lambda_i$, à extraire une solution correspondant au palier de débit r(i).

Il a été constaté que, grâce à l'invention, selon laquelle pour chaque terminal entrant dans une cellule, on procède à un calcul des débits pour les terminaux de la cellule et l'on alloue ces débits calculés à ces terminaux, le taux de rejet des mobiles pouvait être considérablement diminué par rapport à l'état de la technique, d'un facteur pouvant aller jusqu'à 10. Par ailleurs, bien que cette technique s'accompagne d'une baisse du débit de terminaux sélectionnés pour permettre l'entrée d'un nouveau mobile, il a été constaté qu'environ 80 % des mobiles ont un débit qui n'est pas modifié et qu'en ce qui concerne les terminaux dont le débit est modifié les débits modifiés ne sont généralement que très peu abaissés.

Enfin, le procédé d'allocation de débit permet en outre de procéder à un choix des stratégies d'allocation par simple sélection de la valeur du paramètre $\alpha$.

**Revendications**

1. Procédé d'allocation de débits de données pour un ensemble de terminaux mobiles de télécommunication (T) d'une cellule (C1, C2, C3) d'un réseau cellulaire de télécommunication, **caractérisé en ce que** pour chaque nouveau terminal (T) entrant dans la cellule, on calcule une nouvelle valeur de débit pour une partie au moins des terminaux de la cellule de manière à satisfaire à des contraintes liées au fonctionnement de la cellule et à obtenir un débit maximum pour les terminaux de la cellule, et l'on affecte auxdits terminaux les débits calculés.

2. Procédé selon la revendication 1, **caractérisé en ce que** l'on alloue les débits en fonction de stratégies prédéterminées d'allocation des débits.

3. Procédé selon l'une des revendications 1 et 2, **caractérisé en ce que** les débits r(s,t) affectés aux terminaux (T) sont calculés de manière à maximiser la fonction suivante :

$$\sum_{s,t} \frac{r(s,t)^{1-\alpha}}{1-\alpha}$$

dans laquelle :

r(s,t) désigne le débit instantané d'un émetteur s vers un récepteur t ; et
$\alpha$ désigne un paramètre variable de sélection d'une stratégie d'allocation des débits.

4. Procédé selon l'une quelconque des revendications 1 et 3, **caractérisé en ce que** l'on procède à un calcul d'une nouvelle valeur de débit et à une affectation des débits calculés si la puissance demandée au moins à la station de base (BS) de la cellule avec laquelle le terminal entrant communique est inférieure à une valeur maximale de puissance admissible et si la charge au moins de la station de base de la cellule avec laquelle le terminal entrant communique est inférieure à une valeur de maximale de charge admissible.

**5.** Procédé selon la revendication 4, **caractérisé en ce que** l'on rejette le terminal entrant si le débit demandé par le terminal (T) est inférieur ou égal au débit minimum requis pour obtenir un service demandé par le terminal.

**6.** Procédé selon l'une quelconque des revendications 3 à 5, **caractérisé en ce que** l'on procède en outre à une pondération des débits alloués en fonction des services demandés par les terminaux, les débits affectés aux terminaux étant calculés de manière à maximiser la fonction suivante :

$$\sum_{s,t} \frac{q(s,t)r(s,t)^{1-\alpha}}{1-\alpha}$$

q(s,t) désignant un coefficient de pondération des liaisons entre un terminal t et une station de base s.

**7.** Procédé selon l'une quelconque des revendications 1 à 6, **caractérisé en ce que** l'on satisfait aux contraintes liées au fonctionnement de la cellule en calculant les débits de sorte que les relations suivantes soient satisfaites :

$$MR_{s,t} \leq r(s,t) \leq PR_{s,t}$$

$$0 \leq p_{tot,s} \leq \overline{p_{tot,s}}$$

et

$$\delta_{s,t} r(s,t) \leq p'_{s,t} / \left( \upsilon(t) + C \sum_{s' \neq s} p'_{s',t} \right)$$

dans lesquelles :

MRs,t désigne un débit minimum à envoyer de l'émetteur s vers un récepteur t ;
PRs,t désigne un débit maximum à envoyer de l'émetteur s vers un récepteur t ;
Ptot,s désigne la puissance totale transmise par l'émetteur ;

$\overline{p_{tot,s}}$ désigne la puissance totale maximale de l'émetteur ;
δ(s,t) désigne une valeur cible souhaitée du rapport entre le rapport signal/bruit minimum requis et le débit ;
ν(t) désigne un bruit thermique au niveau du terminal ;
C est une constante multiplicative ; et
P's,t est la puissance du signal émis par l'émetteur, reçue au niveau du terminal.

**8.** Procédé selon l'une des revendications 1 et 2, **caractérisé en ce que** les débits r(s,t) affectés aux terminaux (T) pour les liaisons ascendantes sont calculés de manière à maximiser la fonction suivante :

$$\frac{1}{1-\alpha} \sum_{s,t} \left[ \frac{\rho(s,t)}{1-\delta_{s,t}\rho(s,t)} \right]^{1-\alpha}$$

dans laquelle α désigne un paramètre variable de sélection d'une stratégie d'allocation des débits, et dans laquelle :

$$\rho(s,t) = \frac{r(s,t)}{1 + C\delta_{s,t}r(s,t)}$$

où :

r(s,t) désigne le débit instantané d'un émetteur s vers un terminal t ;
C est une constante multiplicative ; et
$\delta(s,t)$ désigne une valeur cible souhaitée du rapport entre le rapport signal/bruit minimum requis et le débit.

**9.** Procédé selon la revendication 8, **caractérisé en ce que** l'on satisfait les contraintes liées au fonctionnement de la cellule en calculant les débits pour les terminaux i de sorte que les relations suivantes soient satisfaites :

$$\frac{MR_i}{1+\delta_i MR_i} \leq \rho(i) \leq \frac{PR_i}{1+\delta i PR_i}$$

$$(1+\lambda) \sum_{j=1}^{Nc} \delta_j \rho(j) \leq 1$$

et

$$0 \leq v_i \delta_i \rho(i) \leq h_i \overline{p_i}(1 - (1+\lambda) \sum_{j=1}^{Nc} \delta_i \rho(j))$$

dans lesquelles :

$MR_i$ désigne un débit minimum à envoyer vers un récepteur i;
$PR_i$ désigne un débit maximum à envoyer vers un récepteur i ;
$\lambda$ désigne un coefficient de proportionnalité ;
$\overline{p_i}$ désigne la puissance totale maximale de l'émetteur ;
$h_i$ désigne un facteur d'atténuation entre le transmetteur i et la station de base;
$Nc$ désigne le nombre de terminaux dans la cellule c ; et
$v$ représente le bruit thermique reçu à la station de base de la cellule c

**10.** Procédé selon l'une des revendications 1 à 6, **caractérisé en ce que** l'on satisfait les contraintes liées au fonctionnement de la cellule en calculant les débits pour les terminaux i de sorte que les relations suivantes soient satisfaites

$$\frac{MR_i}{1+\delta_i MR_i} \leq \rho(i) \leq \frac{PR_i}{1+\delta_i PR_i}$$

$$C_D \sum_{i} \delta_i \rho(i) \leq 1$$

$$0 \leq P_{SCH} + P_{CCH} + \sum_{i \in C} \delta_i \rho(i) + \frac{N_D(i,b) + C_D \sum_j \delta_j \rho(j)[N_D(j,b) - N_D(i,b)]}{1 - C_D \sum_j \delta_j \rho(j)} \leq p_b^{tot}$$

dans lesquelles :

$P_{SCH}$ désigne la puissance du canal de synchronisation non orthogonal descendant de la station de base b ;
$P_{CCH}$ désigne la puissance des canaux communs descendant de la station de base b ;

$p_b^{tot}$ désigne la limite maximale de la puissance totale de transmission de la station de base b ;

$C_D=(1+F)\beta$, F désignant le rapport des interférences intracellulaires sur les interférences intercellulaires reçues par le terminal, et $\beta$ désignant un facteur caractérisant l'interférence due au canal de synchronisation ;

et dans lesquelles :

$$ND(i,b)=(1+F)(\ P_{SCH+}\ \beta P_{CCH})+\nu/h_{b,i}$$

$\nu$ désignant le bruit au niveau du terminal i.

**11.** Equipement d'allocation de débits de données pour un ensemble de terminaux mobiles de télécommunication (T) d'une cellule (C1, C2, C3) d'un réseau cellulaire de télécommunication, **caractérisé en ce qu'**il comporte des moyens de calcul d'une nouvelle valeur de débit pour une partie au moins des terminaux de la cellule, pour chaque nouveau terminal entrant dans la cellule, de manière à satisfaire à des contraintes liées au fonctionnement de la cellule et à obtenir un débit maximum pour les terminaux de la cellule, et des moyens pour affecter auxdits terminaux les débits calculés.

**12.** Module logiciel enregistré sur un support, **caractérisé en ce qu'**il comprend des codes d'instruction pour l'exécution d'un procédé d'allocation de débits selon l'une quelconque des revendications 1 à 10.

## FIG.1

## FIG.2

**Office européen
des brevets**

**RAPPORT DE RECHERCHE EUROPEENNE**

Numéro de la demande

EP 04 29 1785

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 326 463 A (LUCENT TECHNOLOGIES INC) 9 juillet 2003 (2003-07-09) * le document en entier * ----- | 1-12 | H04Q7/38 H04L12/56 |
| X | TOUATI C ET AL: "Fair power and transmission rate control in wireless networks" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 novembre 2002 (2002-11-17), pages 1229-1233, XP010636341 ISBN: 0-7803-7632-3 * le document en entier * ----- | 1-12 | |
| X | JANG WON LEE ET AL: "Downlink power allocation for multi-class CDMA wireless networks" PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA, vol. VOL. 1 OF 3. CONF. 21, 23 juin 2002 (2002-06-23), pages 1480-1489, XP010593715 ISBN: 0-7803-7476-2 * le document en entier * ----- -/-- | 1-12 | DOMAINES TECHNIQUES RECHERCHES (Int.Cl.7) H04L |

Le présent rapport a été établi pour toutes les revendications

| Lieu de la recherche | Date d'achèvement de la recherche | Examinateur |
|---|---|---|
| Berlin | 24 février 2005 | Kampouris, A |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**Office européen**

**des brevets**

## RAPPORT DE RECHERCHE EUROPEENNE

Numéro de la demande

EP 04 29 1785

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | SEONG-LYUN KIM ET AL: "Combined power control and transmission rate selection in cellular networks" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 3, 19 septembre 1999 (1999-09-19), pages 1653-1657, XP010353241 ISBN: 0-7803-5435-4 * le document en entier * ----- | 1-12 | |
| X | MIHAVSKA A ET AL: "A novel flexible technology for intelligent base station architecture support for 4G systems" WIRELESS PERSONAL MULTIMEDIA COMMUNICATIONS, 2002. THE 5TH INTERNATIONAL SYMPOSIUM ON OCT. 27-30, 2002, PISCATAWAY, NJ, USA,IEEE, vol. 2, 27 octobre 2002 (2002-10-27), pages 601-605, XP010619159 ISBN: 0-7803-7442-8 * page 603, section iii : "Radio Resource Management Techniques" * * figure 4 * ----- | 1-12 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| Berlin | 24 février 2005 | Kampouris, A |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 1785

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-02-2005

| Document brevet cité au rapport de recherche | Date de publication | Membre(s) de la famille de brevet(s) | Date de publication |
|---|---|---|---|
| EP 1326463 A | 09-07-2003 | EP 1326463 A1<br>US 2003128665 A1 | 09-07-2003<br>10-07-2003 |

EPO FORM P0460